# EUROPEAN PATENT APPLICATION

(11) **EP 4 312 172 A1**
(43) Date of publication of application: **31.01.2024**
(21) Application number: 22187644.4
(22) Date of filing: 28.07.2022
(51) Int. Cl.: G06Q 20/40

(54) **IMPROVEMENTS IN FRAUD DETECTION**

(71) Applicant: Barclays Execution Services Limited, London E14 5HP (GB)
(72) Inventor: MEHTA, Niraj, Monroe 08831 (US); JAHAGIRDAR, Rashmi, 411027 Pune (IN); MUMMADI, Hemanth, Sparta 07871 (US); TANEJA, Sundeep, 411027 Pune (IN); KULKARNI, Darshana, 411028 Pune (IN); SREEDHARAN, Venkataraghavan, 600128 Kolapakkam (IN); PETROFF, Plamen, Oxford OX2 8LP (GB); GANDHI, Amar, 411017 Pune (IN); VENUGOPAL, Zehra, Highland Park 08904 (US)
(74) Representative: Carpmaels & Ransford LLP

(57) **Abstract**

This disclosure is in the field of fraud detection and relates to computer-implemented methods for use in electronic fraud detection systems, and to data processing apparatus, computer programs, and computer readable storage media for performing the same. One such computer-implemented method comprises accessing a data structure comprising a plurality of transaction records; and executing one or more decision processes sharing a common ruleset, each decision process being configured to use the ruleset to output fraud decisions for transaction records, wherein a fraud decision for a transaction record is a prediction based on the ruleset as to whether the transaction to which the transaction record relates is fraudulent; wherein for each decision process, executing the decision process comprises: reading one or more transaction records for a predetermined historical period from the data structure; and determining, using the ruleset, fraud decisions for the one or more transaction records read from the data structure.

## Description

### Field of Invention

The present invention relates to devices, systems, and computer-implemented methods for detection of fraudulent electronic transactions. In particular, the present invention relates to improvements in the testing and evaluation of rules and models for detection of fraudulent electronic transactions, such as improvements in the speed of such testing and evaluation.

### Background

Huge quantities of electronic transactions are executed and processed worldwide on a daily basis. Whilst many such transactions are genuine/honest, it is a sad fact of life that some such transactions will be fraudulent. Fraudulent transactions may include, by way of non-limiting example: transactions carried out by a malicious party using another party's credentials or private information without authorisation; transactions carried out by a malicious party involving misrepresentation (such as the impersonation of another party); and/or transactions carried out by a malicious party using false/forged cryptographic data.

It is desirous for parties responsible for processing such transactions (such as banks and other payment service providers) to be able accurately and reliably to identify fraudulent transactions and distinguish them from the honest transactions, so that the former can be held, interrupted, flagged, queried, and so forth, whilst the latter are permitted to proceed as normal in a timely fashion. The greater the accuracy with which a provider can detect/distinguish fraud (either in terms of reducing false positives, or reducing false negatives, or a mixture of both), the better.

In addition, the tactics of fraudsters are continually evolving in response to advances in technology, shifts in public culture/education/awareness, and current trends in fraud detection and prevention. Even in a matter of mere days, fraud tactics can grow more sophisticated, or can even just "change", to evade detection by banks and the authorities.

It is therefore important for providers to be able constantly to refine and update their methodology for detecting fraudulent transactions. This involves two very significant steps - firstly, designing, building and/or training new rulesets, models, algorithms, strategies and the like; and secondly, subsequently testing/evaluating these new rulesets (e.g. on real-world data) to determine whether a new ruleset performs well in its fraud detection task (high accuracy), or poorly (low accuracy). If it can be determined that a newly proposed ruleset or strategy for fraud detection outperforms (or is likely to outperform) the current "live" ruleset or strategy presently being used by the provider at a given moment (sometimes termed the "champion" ruleset), the proposed new ruleset can be deemed suitable to replace the old champion ruleset within the live fraud detection system, becoming the new champion itself in the process.

Present approaches to the second, "testing/evaluation", step mentioned above, for determining whether a fraud detection ruleset is likely to be effective or not, involve effectively "trialling" the new ruleset by running it concurrently alongside the current champion ruleset (which continues to be used to detect and action fraudulent transactions in the meantime), and using both to generate decision data for a plurality of live real-world transactions. The fraud decisions from both the champion ruleset and the new ruleset being evaluated may be compared with additional data (which may be acquired only at some future stage, after the decisions have been determined) to determine a measure of accuracy (e.g. a score) for each.

For example, each set of fraud decisions may be evaluated for correctness/accuracy using data indicating known or suspected fraudulent transactions, e.g. based on customer reports, auxiliary components of the fraud detections system, other fraud detection systems, or any other suitable source of fraud information. Decisions may be evaluated at any suitable time, such as on-the-fly as they are determined, or at the point at which the auxiliary fraud data becomes available, or after a batch of transactions of a particular size has been processed and decisions have been generated for each.

There remains a need for more and more accurate and sophisticated fraud detection mechanisms.

### Summary

It is an objective of the present invention to provide systems and methods which improve upon these prior approaches to reduce the total overall number of fraulent transactions which are successfully executed by fraudsters and/or which go undetected, and hence to reduce the damage caused by such fraudsters to legitimate merchants and consumers.

In order to assess the performance of the models and rules in the ruleset accurately and reliably, it can be necessary to record and use several days', several weeks', or even several months' worth of transaction data. For instance, in some applications the volume of transaction data required to test/evaluate the ruleset accurately may span about 90 days. The present inventors have observed that, in the event that the result of the testing stage is positive (the proposed new ruleset is deemed more accurate than the current live "champion" ruleset), there will have been a 90-day "delay", "latency" or "lag" between the improved ruleset being finalised on one hand, and its earliest possible deployment on the other. As has already been discussed, fraud techniques and tactics can transform over a period of as little as 90 days, such that the new champion ruleset is, in fact, somewhat outdated on the very first day of its deployment.

The present inventors have discovered that it is possible to reduce this delay to a period substantially less than the period associated with the volume of transaction data used for testing. That is, an improved approach has been found which allows the ruleset to be evaluated against (say) 90 days' worth of transaction data, but taking substantially less than 90 days (e.g. fewer than 10 days) to complete this evaluation. This has been found to improve the detection of fraudulent electronic transactions overall, at least in part because it reduces the amount of time during which a sub-optimal ruleset is running in the live system, and it ensures that newly developed improved fraud detection strategies are pushed through to the live system more quickly than in the prior art "run-both-in-parallel" approach.

Details of the structural and functional features in several exemplary embodiments of the invention, by which this improvement may be achieved, are set out in full in the following written description. The invention is defined by the appended independent claims, with the dependent claims defining further optional embodiments.

In a first aspect of the invention, there is provided a computer-implemented method, for use in electronic fraud detection, the method comprising: accessing a data structure comprising a plurality of transaction records; and executing one or more decision processes sharing a common ruleset, each decision process being configured to use the ruleset to output fraud decisions for transaction records, wherein a fraud decision for a transaction record is a prediction based on the ruleset as to whether the transaction to which the transaction record relates is fraudulent; wherein for each decision process, executing the decision process comprises: reading one or more transaction records for a predetermined historical period from the data structure; and determining, using the ruleset, fraud decisions for the one or more transaction records read from the data structure.

Advantageously, the historical transaction records allow the requirement mentioned above (of there being a sufficient volume of transaction data used in the testing process to give and accurate and reliable assessment of the ruleset's performance) to be met, without the testing process being constrained or bottlenecked by the rate at which new transaction data is received. For instance, 90 days' worth of transaction data may be processed (to generate corresponding fraud decisions) long before a full 90 days have elapsed, representing a substantial improvement in the rate of completion of the testing process compared with prior approaches. Moreover, in the case where a plurality of decision processes sharing a common ruleset are used, the time taken to process the historical data can be improved via concurrent execution and/or shared memory, thus reducing the time required to test a new ruleset even further still.

Optionally, the data structure comprises a plurality of partitions, wherein for each decision process, reading the one or more transaction records comprises reading from a subset of the plurality of partitions, and preferably from a single distinct partition. The data structure may be partitioned such that the partitions are disjoint and the union of the partitions is equivalent to the data structure. The data structure may be partitioned such that every record in the data structure appears in exactly one of the partitions. Partitioning the data structure in any of these ways can conceptually simplify the system and its construction and, more importantly, improves the throughput of transaction record processing, since each decision process can focus on reading and processing records from a single partition (or subset of paritions) without risking any records being missed or double-counted (which would not only be inefficient, but could also reduce the accuracy and reliability of the evaluation process).

Reading the one or more transaction records by the decision processes and/or determining the fraud decisions by a first decision process may occur concurrently with reading the one or more transaction records and/or determining the fraud decisions by at least a second decision process. A decision process may read each record concurrently with, asynchronously to, in parallel to, independently of, or at the same time as the other decision processes' read operations. Determining the fraud decisions by the one or more decision processes may comprise a decision process determining a fraud decision for a record concurrently with, asynchronously to, in parallel to, independently of, or at the same time as fraud decision determinations of one or more other decision processes. Any or all of these features can be used to provide a method and/or system which is highly scalable and which makes use of concurrent programming paradigms to improve throughput, speed up the testing/evaluation process and hence reduce the overall occurrence of false positives and/or undetected fraudulent transactions.

Optionally, each transaction record in the data structure is timestamped. The data structure may be ordered by record timestamp. Additionally or alternatively, if the data structure is partitioned, each partition of the data structure may itself be ordered by record timestamp. Optionally, reading the data structure, during execution of each decision process, is ordered by record timestamp. Processing records in their proper order is particularly advantageous in many cases, e.g. where a ruleset is stateful and/or where a ruleset is configured to use knowledge about earlier transactions to inform and influence how it determines one or more decisions for one or more subsequent transactions. Rulesets which "look to the past" in this way often perform best when given an ordered set of transactions to process, and so ordering the historical transaction records by timestamp means these rulesets are assessed more fairly, accurately and reliably.

Optionally, each transaction record in the data structure comprises a customer identifier. Further optionally, the data structure is partitioned into the plurality of partitions based on the customer identifiers of its records; and/or the plurality of partitions of the data structure are configured such that no two partitions hold records for the same customer identifier; and/or each partition holds records for its own distinct set of customer identifiers. Partitioning records by customer identifier represents an easily implementable way to divide the total set of historical records among (possibly several) decision processes for more efficient parallel processing, in a way which does not negatively impact decision processes' (and rulesets') ability to determine accurate fraud decisions. In many embodiments, whilst a ruleset may require knowledge of a certain customer's earlier transactions to determine the most accurate decisions for their subsequent transactions, knowledge about the transactions of one customer does not substantially impact decision-making for the transactions of another customer. This makes the customer identifier an ideal candidate field over which to partition the historical transaction records in the data structure.

Determining the fraud decisions may comprise determining a fraud decision for every record in the data structure. This increases the proportion of records in the data struction for which a decision is generated, thus improving the accuracy and reliability of the testing/evaluation process.

The ruleset may comprise a fraud model. The fraud model may be configured to map a plurality of inputs to a model score, optionally wherein the ruleset uses one or more model scores and/or one or more additional rules to determine a fraud decision. The fraud model may be a machine learning model, such as a neural network. The use of a model to inform the ruleset advantageously allows powerful and effective statistical, mathematical and/or computational models to be leveraged in order to produce highly accurate fraud decisions given knowledge of the details of a transaction. The model may have been trained using previous transaction data to make accurate predictions about subsequent transactions.

In cases where a fraud model is used, the fraud model may be stateful, and/or may determine a model score for its plurality of inputs based on previously-seen inputs. In any case, the ruleset may be stateful and/or may determine a fraud decision for its input transaction record based on previously seen transaction records. In this way, advantageously, patterns associated with fraudster behaviour can be picked up on by the model and/or ruleset and used to inform the decision-making process. This allows the ruleset to determine fraud decisions with an accuracy which would not be achievable merely by looking at each transaction in isolation.

The predetermined historical period may be a built-in parameter of the fraud detection system or may be selected by a user. Use of a built-in parameter can allow a default period to be defined which is known to be effectual; enabling user selection improves the overall convenience, customisability and utility of the system. The historical period may define a set of transaction records whose timestamps all fall within a specific window, and in preferred embodiments said window may be approximately, or exactly, the last 90 days.

The method may optionally further comprise a step of evaluating the ruleset by comparing the fraud decisions to fraudulent transaction report data to determine a score for the ruleset. A single ruleset score value, such as a numerical scalar or vector value for the score of a ruleset, advantageously provides a convenient, concise, quantifiable and easily computer-parsable representation of the determined accuracy/effectiveness of the ruleset. The use of fraudulent transaction report data ensures that the score for the ruleset corresponds to real and empirical fraud data, thus improving the accuracy of the assessment process by which the ruleset is being tested/evaluated.

The method may optionally further comprise receiving a live transaction event; and writing a record of the live transaction event to the data structure. Writing the record of the live transaction event to the data structure may optionally comprise writing the record of the live transaction event to one of the partitions. The partition for the record of the live transaction event to be written to may optionally be selected based on a customer identifier of the live transaction event. The optional above steps provide means for new live transaction events processed by the fraud detection system to enter the data structure whilst preserving its useful properties.

Each decision process may be a unique instance of the same decision computer program. Advantageously, this ensures consistency among the decision processes and makes the method or system conceptually simplier and easier to implement in practice.

Optionally, at least one decision process may itself run as a plurality of concurrent threads, and in one preferred embodiment, every decision process itself runs as a plurality of concurrent threads. This serves to further improve the throughput rate at which transaction records are processed during the testing/evaluation of a ruleset.

The data structure may be a Kafka topic and/or the decision processes may run on a Kafka cluster. The partitions may be Kafka partitions. The decision program may be a Kafka consumer application. Advantageously, the Kafka platform is open-source, highly scalable, fault-tolerant, high-throughput, well-documented, robustly stress-tested and trusted by thousands of organisations, and offers integration with hundreds of event sources/sinks, client libraries in a vast array of programming languages, and high cluster availability.

In a further aspect of the invention, there is provided a computer-implemented method for use in electronic fraud detection, the method comprising: receiving a stream of live transaction events; for each live transaction event: determining, using a first ruleset, a fraud decision for the live transaction event, wherein the fraud decision for the live transaction event is a prediction based on the ruleset as to whether the transaction to which the live transaction event relates is fraudulent; and writing a record of the live transaction event to a data structure of transaction records; receiving a stream of fraudulent transaction reports; executing one or more decision processes sharing a common second ruleset, each decision process configured to use the second ruleset to output fraud decisions for transaction records, wherein a fraud decision for a transaction record is a predication based on the ruleset as to whether the transaction to which the transaction record relates is fraudulent; wherein, for each decision process, executing the decision process comprises: reading one or more transaction records for a predetermined historical period from the data structure; and determining, using the second ruleset, fraud decisions for the one or more transaction records read from the data structure; and comparing the fraud decisions determined using the second ruleset to data from the stream of fraudulent transaction reports to determine a performance score for the second ruleset.

The method may further comprise either: receiving a previously-computed performance score for the first ruleset; or comparing the fraud decisions determined using the first ruleset to data from the stream of fraudulent transaction reports to determine a performance score for the first ruleset. The latter option provides a means for evaluating the first ruleset based on the already-available fraudulent transaction reports, allowing its accuracy to be quantified and enabling it to be compared and contrasted with other rulesets (e.g. the second ruleset). The former option can advantageously speed up the ruleset testing process when one champion ruleset is to be compared with a plurality of newly proposed rulesets, by making use of a precomputed (e.g. cached) score for the first ruleset so that it does not have to be calculated multiple times, thus saving time and compational resources.

The method may further comprise: in accordance with a determination that the performance score for the second ruleset indicates a higher accuracy than the performance score for the first ruleset, replacing the first ruleset used to determine fraud decisions for live transaction events with the second ruleset. Advantageously, this enables a new ruleset which has been determined to outperform the champion ruleset to be deployed immediately, so that live transactions are processed using the new improved ruleset, reducing the occurrence of false positives and/or undetected fraudulent transactions during the "interim" period which would otherwise occur between the result of the evaluation and the deployment of the new champion.

The method may further comprise: determining that the performance score for the second ruleset indicates a higher accuracy than the performance score for the first ruleset; receiving a new live transaction event; determining, using the second ruleset, a fraud decision for the new live transaction event; and either: in accordance with a determination that the new live transaction event is likely to be fraudulent, terminating and/or generating an alert for the transaction; or in accordance with a determination that the new live transaction event is not likely to be fraudulent, processing the transaction. Advantageously, the above steps ensure that the new live transaction event is processed according to the higher-accuracy ruleset (i.e. the second ruleset), such that it is more likely to be terminated/flagged if it is fraudulent, and more likely to be processed as normal if not.

Determining the fraud decision for each live transaction event may occur prior to writing the record to the data structure. Alternatively, it may occur at the same time as, or concurrently with, writing the record to the data structure. The former may advantageously speed up the processing of live transactions. The latter may advantageously speed up the testing/evaluation of newly proposed/designed rulesets.

The data structure may be a queue. Records may be deleted, dropped or forgotten from the data structure in the same order that they were inserted. This may be the order of the records' timestamps. An advantage of queue-like data structures in the context of the present invention is that computationally efficient (e.g. constant-time) operations can be performed for insertion and/or deletion of transaction records to/from the data structure. A further advantage is that the data structure's size, and its associated memory requirements, can be fixed and/or bounded by an upper limit. Alternatively or additionally, the data structure may be a log.

In a yet further aspect of the invention, there is provided a device comprising a processor and a memory, the memory containing computer-readable instructions which, when executed on the processor, cause the processor to perform any method according to the first or further aspect of the invention.

In a still yet further aspect of the invention, there is provided a non-transitory computer-readable storage medium containing computer-readable instructions which, when executed by a computer, cause the computer to perform any method according to the first or further aspect of the invention.

### Brief Description of the Drawings

The present invention has been described below purely by way of example with reference to the accompanying drawings in which:
Fig. 1 is a component diagram of an exemplary fraud detection system in which the invention may be implemented;
Fig. 2 is a component diagram of an exemplary computing device, which may be employed as one of the computing devices of Fig. 1;
Fig. 3A depicts the use of a fraud model to derive a model score from a transaction;
Fig. 3B depicts the use of a ruleset to determine a fraud decision for a transaction;
Fig. 4 depicts the processing of a live transaction event using a decision process equipped with a ruleset, which includes obtaining a fraud decision for the transaction;
Fig. 5 depicts a graphical user interface for a computer program which may implement the present invention;
Figs. 6A, 6B and 6C depict a batch processing of a plurality of transactions by a plurality of decision processes using a common ruleset to generate a plurality of fraud decisions;
Fig. 7 depicts a data structure comprising a plurality of partitions, which may be used in the batch processing operation of Fig. 6;
Fig. 8 depicts the determination of scores for two different rulesets, based on decisions generated using the rulesets and on known fraudulent transaction report data;
Fig. 9A is a flowchart of a computer-implemented method for use in an electronic fraud detection system according to a first embodiment of the present invention; and
Fig. 9B is a flowchart of a computer-implemented method for use in an electronic fraud detection system according to a further embodiment of the present invention.

### Detailed Description

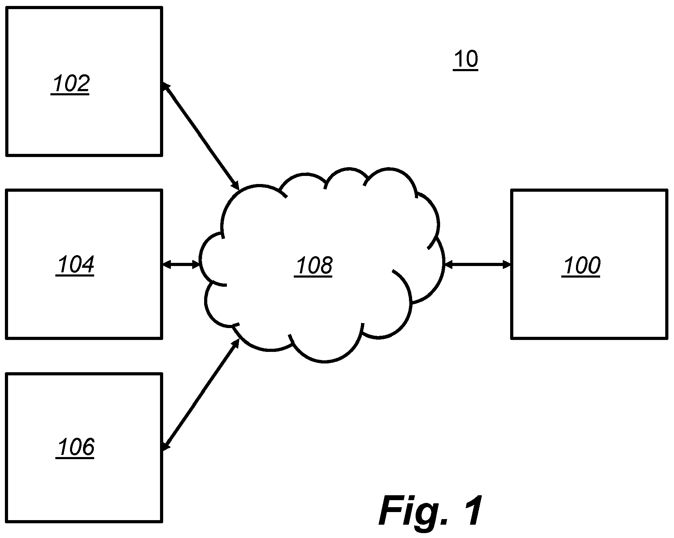

Referring to Fig. 1, there is provided a computing system 10 suitable for detecting fraudulent transactions. System 10 comprises a first computing device 100, and a plurality of further computing devices (illustratively depicted here as three computing devices 102, 104 and 106, though the skilled person will recognise that any suitable number of such further computing devices may be employed). In some preferred embodiments, first computing device 100 is a server. Further computing devices 102, 104, and 106 may comprise servers, and/or may comprise client devices including but not limited to point-of-sale terminals, mobile devices, tablet computers, laptop computers and desktop computers.

Each of the computing devices are communicatively coupled with each other via a suitable network 108. In one exemplary embodiment, network 108 is the internet, although it will be recognised by those skilled in the art that the present invention may be deployed in relation to other suitable networked configurations of computing devices 100, 102, 104, and 106 that may exist. For example, computing devices 100, 102, 104, and 106 may be coupled instead by a local area network (LAN); a personal, home, storage, campus, metropolitan, wide or global area network (PAN/HAN/SAN/CAN/MAN/WAN/GAN, respectively); a private network such as an enterprise private network (EPN) or virtual private network (VPN); a backbone network; or any other suitable network. Additionally or alternatively, computing devices 100, 102, 104, and 106 need not all be directly connected to network 108, and indeed some or all of the devices may be connected only to one another. Additionally or alternatively, more than one network 108 may be employed to communicatively couple computing devices 100, 102, 104 and/or 106.

System 10 is depicted with computing devices 100, 102, 104, and 106 being bilaterally coupled to network 108; that is, double-ended arrows are used to represent computing devices 100, 102, 104, and 106 being configured both to transmit data to network 108, and to receive data from network 108. Nevertheless, the skilled person will recognise that the present invention is equally applicable in systems wherein some or all of the connections between computing devices 100, 102, 104, and 106 and network 108 are unilateral, i.e. wherein one or more of computing devices 100, 102, 104, and 106 are configured either only to transmit data to network 108, or only to receive data from network 108.

Computing device 100 is configured to perform a computer-implemented method in accordance with any embodiment of the present invention. For example, computing device 100 may be configured to execute one or more decision processes sharing a common ruleset; to receive and read a data structure for each decision process; and to determine fraud decisions for transactions in the data structure by the one or more decision processes. Additionally or alternatively, computing device 100 may be configured to receive a stream of live transaction events; to determine a fraud decision for each using a first ruleset and write a record to a data structure for each; to receive a stream of fraudulent transaction reports; to execute one or more decision processes sharing a common second ruleset; to read the data structure for each decision process; to determine fraud decisions for transaction records in the data structure using the second ruleset; and to compare the fraud decisions determined using the second ruleset to the fraudulent transaction reports to determine a performance score.

In some embodiments, the data structure is physically stored within computing device 100 for purposes of improved security and/or ease of access and/or speed of access. In other embodiments, the data structure is held elsewhere (e.g. computing device 102, 104 or 106) for improved system modularity and/or design abstraction and/or overall convenience. In yet further embodiments the data structure may be stored in a distributed fashion (e.g. having different partitions stored on different machines).

In some embodiments of the present invention, the one or more decision processes are executed in/on the processing hardware and/or software of computing device 100. In other embodiments, the one or more decision processes run elsewhere (e.g. computing device 102, 104 or 106) and/or run in a distributed fashion (e.g. across computing devices 100, 102, 104 and/or 106).

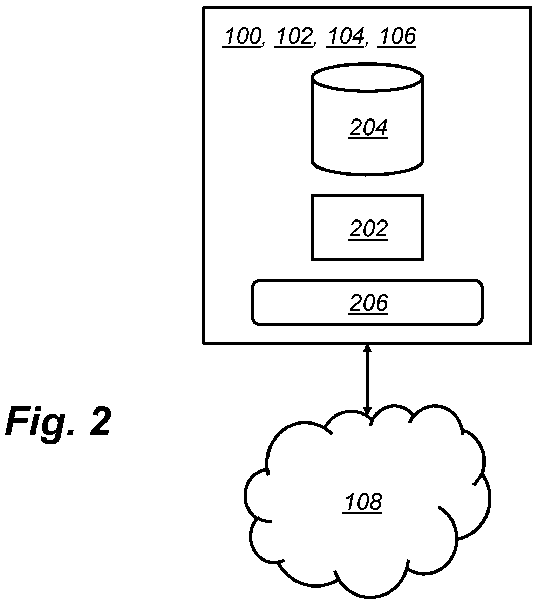

A computing device (for example, computing device 100) may be configured to perform the computer-implemented methods for use in an electronic fraud detection system described herein using suitable computing device hardware features, such as some or all of those described below in connection to Fig. 2. Where a given method described herein comprises receiving data, for example including (but not limited to) models, rulesets, decision computer programs, transaction records, fraud decisions, data structures or fraudulent transactions reports, that data may be retrieved from a storage location within computing device 100. Additionally or alternatively, the data item may be retrieved from one of further computing devices 102, 104, and 106 (either directly, or indirectly via network 108). Computing device 100, and indeed one or more of further computing devices 102, 104, and 106, may be any computational device configured to perform computer-implemented methods as described herein. For example, a computing device may comprise a processor, or any other hardware suitable for performing the methods described herein, as will be appreciated by the person skilled in the art.

Whilst various methods for use in electronic fraud detection systems according to embodiments of the present invention are discussed separately herein, it will be recognised by those skilled in the art that none of computing devices 100, 102, 104, and 106 need necessarily be limited solely to the execution of methods according to any one particular embodiment. That is, for the avoidance of doubt, any computing device 100, 102, 104, or 106 may be configured to perform any subset of the disclosed methods, including all of the disclosed methods. In some embodiments, a computing device comprising suitable hardware and software features (e.g. multiple CPU cores, multithreading, and the like) may be configured to perform methods according to several different embodiments concurrently and/or in parallel. Additionally or alternatively, such a computing device may be configured to perform multiple instances of the same method concurrently and/or in parallel.

Whilst computing devices 100, 102, 104, and 106 are illustrated in Fig. 1 as separate entities for the sake of greater conceptual simplicity and clarity, it will be appreciated by those skilled in the art that, in practice, the same physical device may play the part of several computing devices, and/or one or more of the computing devices may reside within one or more of the other computing devices. Moreover, an entity which is represented in Fig. 1 as a single computing device may, in practice, be embodied as a plurality of distinct computing devices, said plurality fulfilling the role of a particular computing device by using algorithms or techniques for distributed processing or distributed storage.

In various embodiments, data used in performing the steps of the present invention may be stored in computing device 100, or any of further computing devices 102, 104 or 106 (preferably which is communicatively coupled to network 108). For example, any of the illustrated computing devices may be used to store one or more of the models, rulesets, decision computer programs, transaction records, fraud decisions, data structures or fraudulent transactions reports in accordance with the present invention. Myriad other patterns and paradigms for distributing the processing, communication and/or storage aspects associated with various concrete implementations of the present invention will be apparent to those skilled in the art.

Referring now to Fig. 2, components of a computing device such as computing device 100 are depicted, including a processor 202, memory 204 and communication interface 206. The processor 202 is configured to obtain computer executable code from the memory 204 and execute the computer executable code to perform the processes described herein. Computing devices 102, 104 and 106 of system 10 may likewise each also be configured with the same type of components in the same fashion as depicted in Fig. 2.

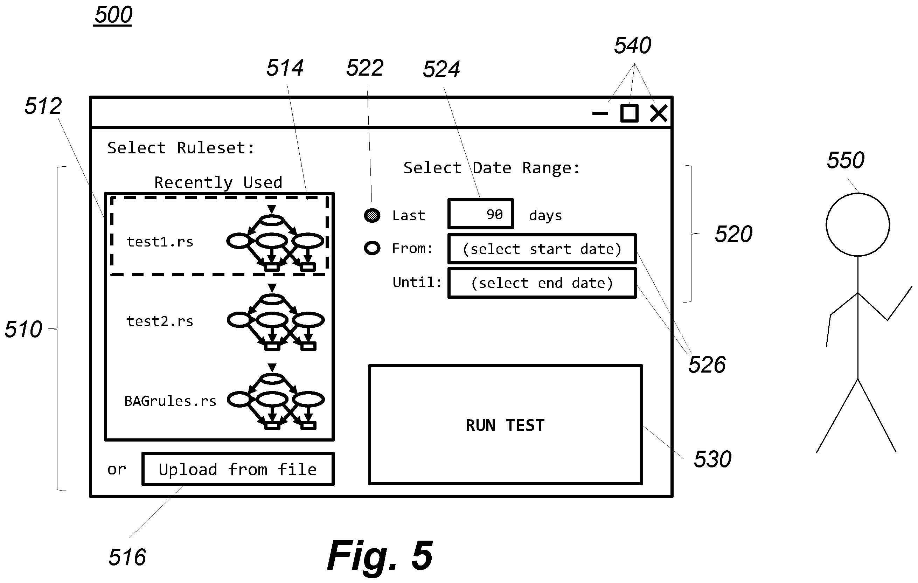

In some embodiments, any one or more of computing devices 100, 102, 104 and 106 may additionally be configured with output components for user interaction, such as console outputs, menu-based systems, graphical user interfaces, displays, CRT or LCD screens, monitors, and the like. In some embodiments, any one or more of computing devices 100, 102, 104 and 106 may additionally be configured with input components for user interaction, such as mice, keyboards, trackballs, joysticks, touchscreens, and the like. For example, as discussed in more detail in relation to Fig. 5, a graphical user interface may be provided to enable selection of a ruleset by a user for testing/evaluation, as well as selection of a suitable historical period for the testing, using a touchscreen, mouse and/or keyboard.

Of course, it will be recognised that such user-facing features are by no means necessary for each one of computing devices 100, 102, 104 and 106 to posess in order to realise the benefits associated with the present invention, and that the benefits of the present invention may be realised even with some of computing devices 100, 102, 104 or 106 lacking some or all of the aforementioned user-facing input and/or output components. Indeed, in embodiments having a high degree of automation wherein rulesets may be automatically selected, tested and/or promoted to the role of "live"/"champion" ruleset (e.g. by computing device 100 itself), no user-facing components (or only minimal user-facing components) may be needed.

Any data described as being stored in one or more of the computing devices disclosed herein may be stored in hardware which is easily accessible by processor 202, such as in memory 204. The data may be held in ROM or RAM, or held in and retrieved from a solid state or hard disk drive, or stored externally and retrieved via a network such as network 108 using communication interface 206. Other technical means of storing data and retrieving it for use by processor 202 will be evident to those of ordinary skill in the art.

It will be appreciated that the transmission of data among components of system 10 may occur in a variety of specific ways, many of which are essentially functionally equivalent for the purposes of the present invention. For example, data may be transferred from one computing device to another computing device over a network such as network 108 via "push"-style proactive sending steps by the transferring device, or via "pull"-style steps carried out on the processor of the receiving device, such as repeated polling of the transferring device to determine whether new data is available and ready to be transferred. Networking may be implemented using a layered model such as the TCP/IP model in accordance with any suitable set of selected application, transport, internet and data link layer protocols as will be known to those skilled in the art.

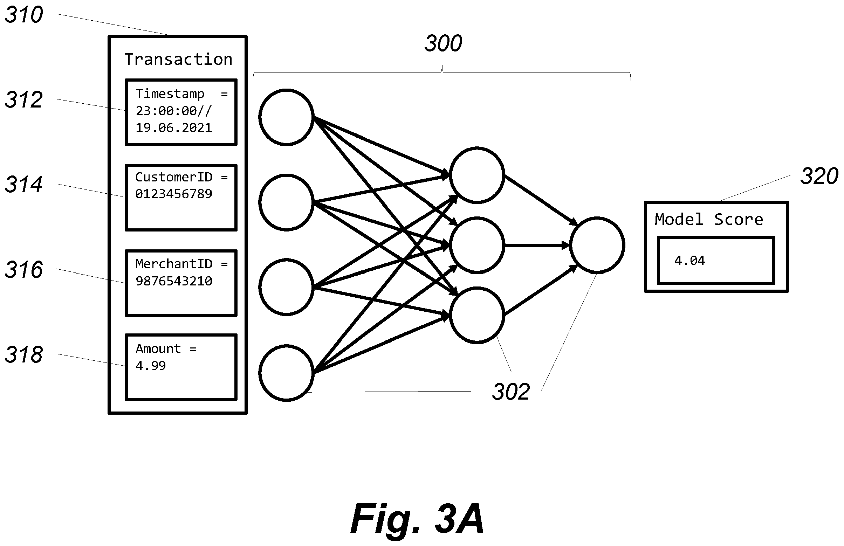

Referring now to Fig. 3A, an exemplary transaction 310, fraud model 300 and model score 320 are depicted. Transaction 310 is an electronic representation, received by computing device 100, of a transaction event that has occurred in connection to fraud detection system 10 e.g. between a customer and a merchant. For example, transaction 310 may be a debit transaction or a credit transaction. Transaction 310 may be made using a debit card or credit card. Transaction 310 comprises data for various properties in several "fields" 312, 314, 316, 318.

As used herein, terms such as "live transaction", "transaction event", "live transaction event" and so forth may be used to denote a transaction which has yet to be fully processed and actioned inside fraud detection system 10, e.g. a transaction which has been received at computing device 100 but for which no fraud decision has been computed yet. As used herein, terms such as "transaction record", "historical transaction record", "historical transaction" and so forth may be used to denote a transaction which has previously been processed and actioned inside fraud detection system 10, resulting in e.g. the transaction being successfully executed or the transaction being held or cancelled on suspicion of fraud. However, those skilled in the art will recognise that both "live" and "historical" transaction events or records will share at least some certain key fields (e.g. timestamp 312, customer identifier 314, merchant identifier 316 and/or amount 318). Indeed, the fields of a "live transaction event" and a "historical transaction record" may be identical. Some transaction fields for which data is available only after the transaction has been processed (e.g. a fraud decision outcome) may be empty or blank in a live transaction event, or may contain only a notional placeholder value.

In the illustrated example, transaction 310 is depicted comprising a timestamp 312 denoting a date and/or time at which a requesting party attempted to carry out the transaction. Transaction 314 is depicted further comprising a customer identifier 314, which may be a unique number, numeral, token, or alphanumeric string (or any other suitable datatype) associated with the specific customer involved in the transaction. Transaction 314 is depicted further comprising a merchant identifier 316, which may be a unique number, token, or alphanumeric string (or any other suitable datatype) associated with the specific merchant involved in the transaction. Transaction 316 is depicted further comprising an amount 318 indicative of the magnitude or quantity of the transaction's value (e.g. an amount of a currency or cryptocurrency being transferred).

As will be understood by those skilled in the art, transaction 310 is depicted with merely illustrative fields included, and may in practice have different fields and/or (potentially many) more fields, which need not include those shown in Fig. 3A. To give but one example, a field denoting a currency for the transaction may be provided, or amount 318 may be modified to include its own currency indication alongside the numerical indication. Other suitable modifications or additions to the internal structure of transactions, transaction records, transaction event data and so forth will be known to those skilled in the art.

Fig. 3A further depicts a fraud model 300. Fraud model 300 may be any suitable process (or algorithm, method, function, subroutine, formula, rule etc.) that, given a transaction 310 as input, can produce a model score 320 as an output. In various embodiments, for example, fraud model 300 may be a mathematical model, a statistical model, and/or a machine learning model. In the illustrated embodiment, fraud model 300 is a fully-connected "neural network", comprising a plurality of artificial neurons 302 arranged in layers, having "edges" or "connections" extending from each artificial neuron 302 in any one given layer to every artificial neuron 302 in the subsequent layer. Artificial neurons 302 in the initial "input" layer are configured to output real numbers corresponding to encodings of the data in fields 312, 314, 316, 318 of transaction 310. Artificial neurons 302 in each subsequent layer receive (along each "edge") the outputs of the previous layer, combine them as a weighted sum, optionally add a bias to the total, and apply some suitable activation function. The output of this process then becomes an input the the following layer, and so forth, until a final output is produced.

The activation function may be any suitable function including but not limited to: a step function (e.g. a binary step); a logistic, sigmoid or soft step function; a hyperbolic tangent (tanh) function, a rectified linear unit (ReLU), a "leaky" rectified linear unit, a Gaussian error linear unit (GELU), a softfplus function or any other suitable activation function as will be known to those of skill in the art. The activation function may be a nonlinear function. The final output (from the last layer of artificial neurons 302) may be used directly as model score 320. Alternatively, model score 320 may be derived from the final output by using one or more additional processing steps (e.g. rounding, truncation, etc). In various embodiments, irrespective of specific implementation, a model score 320 for transaction 310 is an indication of a likelihood (or risk) that transaction 310 is fraudulent. For example, a very high model score 320 for transaction 310 may show that fraud model 300 perceives transaction 310 to be a likely instance of fraud. In alternative implementations, an inverse score system may be used (i.e. a very low model score 320 for transaction 310 may show that fraud model 300 perceives transaction 310 to be a likely instance of fraud).

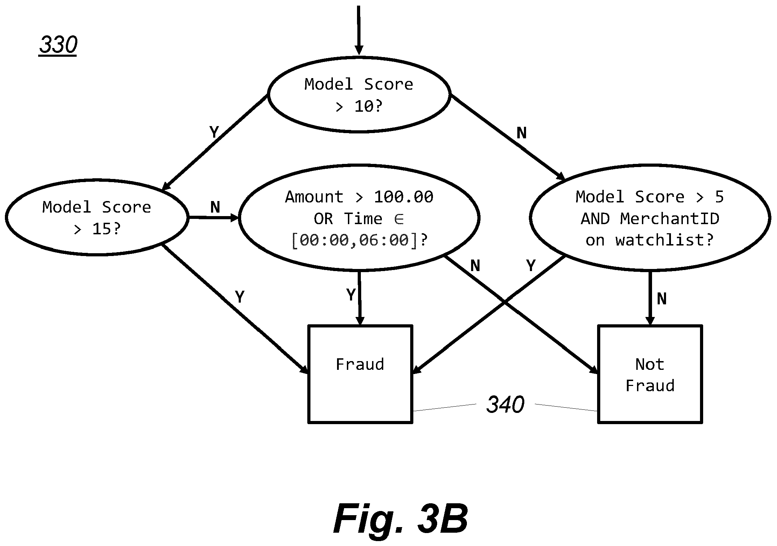

Referring now to Fig. 3B, there is depicted a ruleset 330 for deriving fraud decisions 340. Ruleset 330 is configured to use information about a transaction 310 (and, optionally, additional known/received information) in conjunction with a collection of rules, to determine a single unique fraud decision 340 specific to transaction 310. Preferably, ruleset 330 is deterministic. That is, given the same transaction 310 and surrounding contextual circumstances, ruleset 330 should always arrive at the same fraud decision 340 for transaction 310 (with no element of randomness, unpredictability or stochastic behaviour). Preferably, ruleset 330 is well-defined. That is, it should always be possible to determine a fraud decision 340 for any transaction 310 in any contextual circumstances by following rules in ruleset 330.

Ruleset 330 may use a fraud model 300 as part of deriving fraud decision 340. For example, as illustrated in Fig. 3B, at least one rule of the ruleset may use the model score 320 determined by fraud model 300 as an input, with model score 320 influencing/determining how the ruleset will generate fraud decision 340 for transaction 310. Additionally or alternatively, ruleset 330 may use data from one or more individual fields 312, 314, 316, 318 of transaction 310 as part of deriving fraud decision 340. For example, as illustrated in Fig. 3B, at least one rule of the ruleset may use e.g. amount 318 and/or timestamp 312 as an input, with this data influencing/determining how the ruleset will generate fraud decision 340 for transaction 310.

Additionally or alternatively, ruleset 330 may use additional known or received information as part of deriving fraud decision 340. This additional information may be any other contextual, historical, auxiliary and/or state-based information that may be stored in, or received by, computing device 100. For instance, ruleset 330 may make use of a particular list of e.g. suspicious merchant identifiers whose transactions are afforded a higher degree of scrutiny, with such a list being stored in a file or database on computing device 100 or another computing device connected thereto.

Ruleset 330 may be stateful. That is, ruleset 330 may be endowed or associated with a specific state at any given time, and this state may influence the fraud decision 340 output by ruleset 330. The state may be updated based on the content of transaction records received by computing device 100. In this way, ruleset 330 can be configured to determine a fraud decision for a transaction 310 based (at least in part) on previously-seen transaction records. It will be appreciated that such a configuration does not conflict with a ruleset's being deterministic, since it would still be possible to compute the fraud decision 340 for a transaction 310 provided that the present state of ruleset 330 were known.

In a preferred embodiment, fraud decision 340 comprises (or consists of) a value selected from a discrete set of distinct possible values. These discrete values may each indicate a level of likelihood or confidence that the associated transaction 310 is fraudulent, and/or each discrete value may be associated with an action to take in the processing of transaction 310 (e.g. logging transaction 310 in a log, raising an alert in relation to transaction 310, performing further inspection of transaction 310, halting transaction 310, and so forth). In one example, fraud decision 340 comprises a selection of one of two possible values (i.e. "fraud" or "not fraud"). Fraud decision 340 can comprise/be a predication based on ruleset 330 as to whether transaction 310 is fraudulent or not.

Ruleset 330 may comprise rules based on Boolean combinations of other rules. That is, given one or more "atomic" conditions or propositions in ruleset 330 (e.g. whether amount 318 exceeds a certain threshold, whether the timestamp falls within a certain interval, whether the model score is in a particular range, whether the merchant identifier is on a particular list, and so forth), compound rules may be constructed by taking their negation (logical NOT), conjunction (logical AND) or disjunction (logical OR). Moreover, rules can be constructed by taking combinations of combinations (e.g. (a OR ((NOT b) AND c))) to go on building these propositional formulae up to any arbitrary length desired by the system user (e.g. a Fraud Analyst or Quantitative Analyst looking to detect fraudulent transactions).

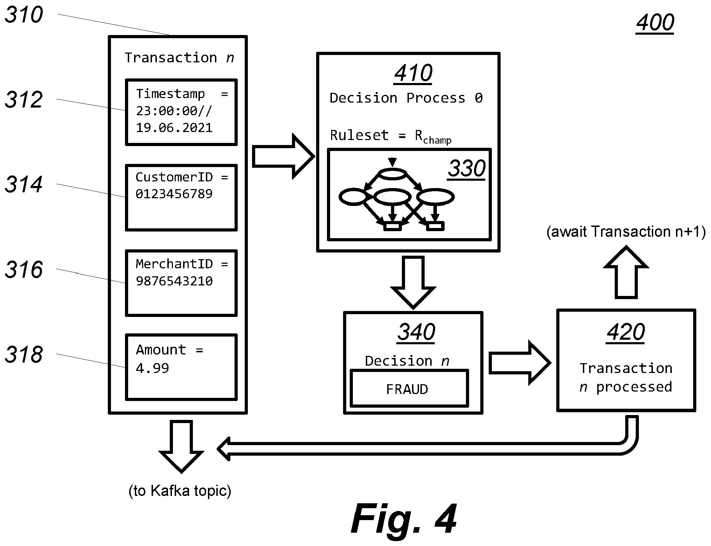

Referring now to Fig. 4, there is depicted a processing flow 400 for a "live" transaction 310 that is received at computing device 100. Before any action is taken in relation to transaction 310 (e.g. any transfer of funds between accounts), a decision process 410 (which may be running on computing device 100 as previously described) processes transaction 310 by applying the current "champion" ruleset 330 to determine a fraud decision 340 for transaction 310. As mentioned, rulset 330 may incorporate a fraud model 300, rules based on model scores, rules based on values of individual fields or combinations thereof, rules based on auxiliary information such as historical information and/or a ruleset state, or Boolean combinations of other rules.

Once decision process 410 has computed fraud decision 340 for live transaction 310 using ruleset 330, transaction 310 is processed (depicted in Fig. 4 as processing step 420) in accordance with its determined fraud decision 340. For instance, if fraud decision 340 represents a verdict by ruleset 330 that transaction 310 is not fraudulent, or is a lower fraud risk, transaction 310 may be permitted to continue normally, with funds being transferred between the relevant accounts as appropriate. On the other hand, if fraud decision 340 represents a verdict by ruleset 330 that transaction 310 is fraudulent, or is a higher fraud risk, action may be taken by the system in relation to transaction 310 to log flag, hold, delay, interrupt and/or terminate the transaction, and/or to investigate it further (either automatically in software, or by a human analyst).

Regardless of the decision, once transaction 310 has been processed, the system moves on to begin processing the next transaction (for instance, waiting for its transaction data to arrive at computing device 10 or, in higher-throughput applications, by reading it directly from a buffer (not shown)). The data from transaction 310, which has just now been processed, is written to a data structure of transaction records so that it can be used in the testing of new rulesets (as described in more detail hereinbelow). Some or all of the transaction records in the data structure of transaction records may be historical transaction records, i.e. transaction data for transactions that have already been processed and actioned.

The data structure may be a first-in-first-out (FIFO) data structure such as a queue. For example, records may be deleted from the data structure in the same order they were inserted, e.g. to maintain an approximately (or exactly) constant size of the queue. Additionally or alternatively, each partition of the data structure may be a FIFO data structure such as a queue. For example, transaction records may be read from each partition by a respective decision process in the order that they were inserted into that partition, e.g. to allow the decision process to determine fraud decisions for any given transaction based on the content of previous (earlier) transaction records. The data structure may act, in a general sense, as a log. In some embodiments, the data structure is a "topic" in an Apache Kafka^{®} environment. More information regarding Kafka and Kafka topics may be found, for example, in Kafka: The Definitive Guide, 2nd Edition, by Shapira, Palino, Sivaram & Petty, first published November 2021 by O'Reilly Media, Inc. (ISBN: 9781492043089).

In the embodiment pictured in Fig. 4 and described above, the data for transaction 310 is recorded in the data structure (i.e. Kafka topic) only after the immediate processing of transaction 310 is complete so that the transaction can be acted on as quickly as possible, with minimal delay. As will be recognised by those skilled in the art, other configurations whereby transaction 310 is written to the log and then processed, or logged and processed concurrently, are possible. Such configurations may further improve the speed at which models and rulesets can be tested or evaluated in accordance with the present invention.

Turning now to Fig. 5, there is depicted a graphical user interface 500 via which a user 550 is enabled to interact with embodiments of the present invention. Graphical user interface 500 is depicted having ruleset selection elements 510, historical period selection elements 520, and execution element 530.

Ruleset selection elements 510 comprise graphical controls with which user 550 can interact to input a selection of a suitable ruleset for testing/evaluation. For example, ruleset selection elements 510 may comprise a file selection element 516 with which user 550 can interact to open a dialogue box, prompting them to select a ruleset which is saved as a file in memory (e.g. on a hard disk) of computing device 100 in an appropriate file format (e.g. a custom format).

For maximal convenience, utility, and ease of use, ruleset selection elements 510 can also comprise controls for quick selection of recently-used rulesets. For instance, Fig. 5 shows the use of quick selection pane 512 to display three rulesets to user 550 each of which may have recently been loaded into (and/or tested using) a computer program implementing the present invention. One of the rulesets in quick selection pane 512 may be distinguished as the currently "selected" ruleset 514 using any one of a variety of indications, such as by adding or changing a colour, shading, 3D effect, animation, border, size, position, marker (e.g. a pointer or arrow or the like), and so forth.

Historical period selection elements 520 comprise graphical controls with which user 550 can interact to input a selection of a suitable historical period to be used as part of the testing/evaluation of selected ruleset 514. The selected historical period will determine the set of transaction records which will be fed into decision processes that are equipped with selected ruleset 514, to determine fraud decisions for each, based on the rules of selected ruleset 514. These fraud decisions can subsequently be used to evaluate the correctness and accuracy of selected ruleset 514 as described hereinabove and hereinbelow, for instance by being compared to data from a stream of fraudulent transaction reports to determine a performance score for selected ruleset 514.

For example, historical period selection elements 520 may comprise window start/end selection elements 526, which which a user can interact to input a start date and/or time and an end date and/or time which together define a historical period. Inputs to window start/end selection elements 526 may be sanitised, for example to prevent the "end" date/time from being earlier than the "start" date/time. Window start/end selection elements 526 may, upon user interaction, open a calendar dialogue box, a draggable slider, or any other suitable graphical component, and/or may allow manual date entry e.g. via a keyboard.

For maximal convenience, utility, and ease of use, historical period selection elements 520 can also comprise controls for quick selection of a historical period which is equivalent to the last n hours, days, weeks, or months, for some positive integer n. For instance, Fig. 5 shows the use of last-n-days input box 524 to select, as the desired predetermined historical period, a window spanning a fixed number of days up to the present day (wherein the present day can be defined e.g. by a user, by software running on computing device 100, by the clock of computing device 100's opertating system (OS) or basic input/output system (BIOS), and so forth). Last-n-days input box 524 may in some embodiments be pre-populated with a suitable value, such as 30, 60, 90, 120, 150 or 180.

In order to select exclusively between using either window start/end selection elements 526 or last-n-days input box 524, graphical user interface 500 may provide radio buttons 522 which can be toggled by user 550 to select up to one of these historical period input methods (but not both at once).

When user 550, having developed or adjusted a fraud model and/or a ruleset, wishes to test the resultant ruleset to evaluate its performance, they can interact with execution element 530 to cause one or more decision processes to begin reading transaction records from the data structure and determining fraud decisions for them using selected ruleset 514, as will be described in more detail hereinbelow. Graphical user interface 500 may also comprise windowing controls 540 via which user 550 may close, maximise, minimise or restore graphical user interface 500, and/or to move, resize, stretch, drag, or shake the frame of the graphical window.

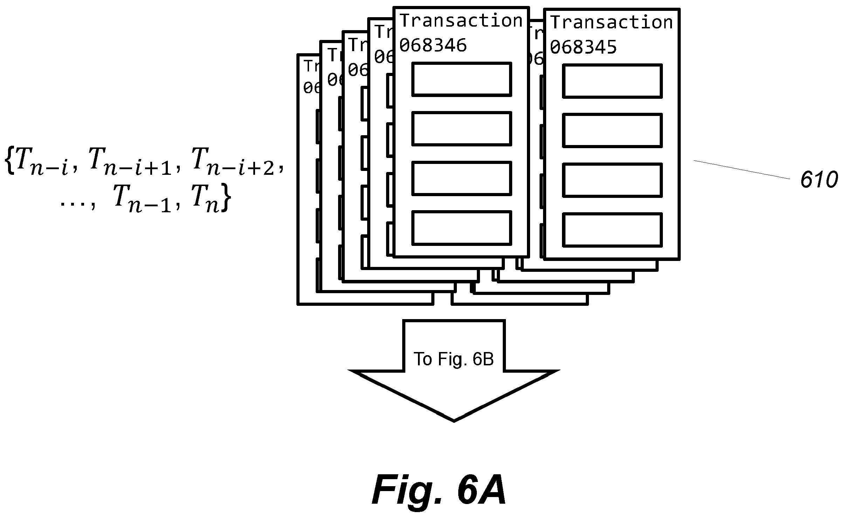

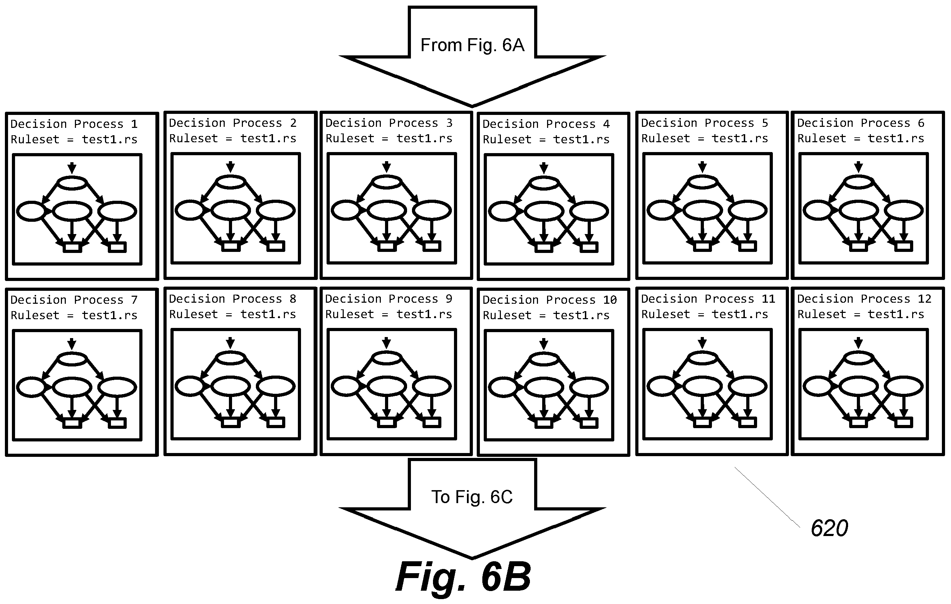

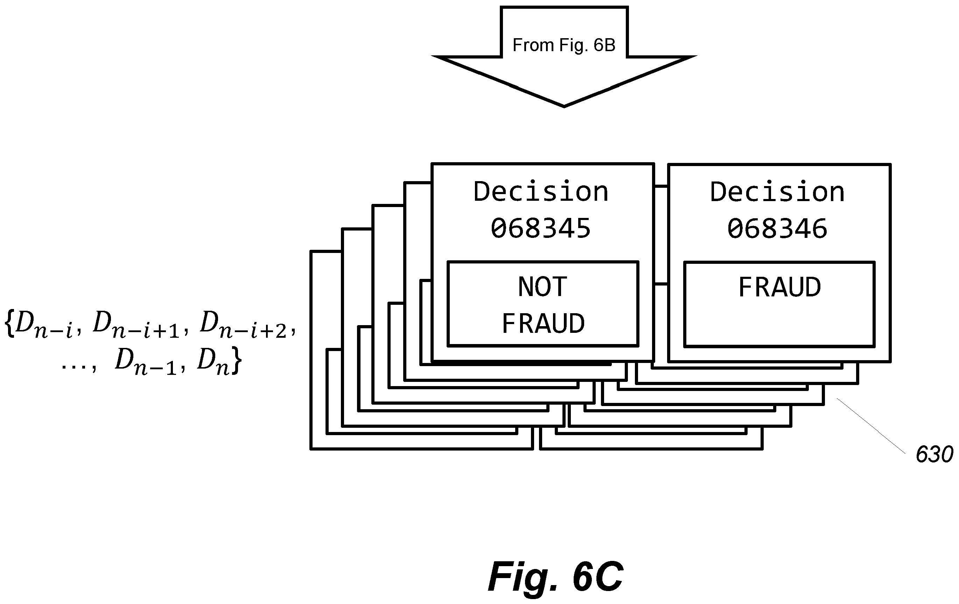

Referring now to Figs. 6A, 6B and 6C, details of a process for reading one or more transaction records for a predetermined historical period from a data structure by one or more decision processes, and determining fraud decisions for these transaction records by the decision processes using a ruleset, are described.

This fraud-decision-determination process may occur on demand and/or in response to a user input. For example, the process may occur in response to user activation of execution element 530 in Fig. 5, once a ruleset and historical period have been selected. It will be appreciated, however, that the benefit of the present invention can be realised without any user-centric input of a chosen historical period or ruleset for testing, and without any user-driven commencement of the process. For instance, a default historical period of the last 90 days may be hard coded into a system, the ruleset for testing may be automatically pulled from a predetermined file location, and/or the decision processes may be configured to remain running idle and begin processing upon detection of new transaction records in the data structure, to give a few brief examples. Alternatively, these inputs may be provided by a user 550, but via means other than a graphical user interface (for example, a command-line interface).

Fig. 6A depicts a plurality of transaction records 610 for a predetermined historical period. Transaction records 610 are read from a data structure by one or more decision processes in accordance with the present invention. The set of i records may be denoted {*Tₙ₋ᵢ, T*_{*n-i*+1}*, T*_{*n-i*+2}*, ..., T*_{*n*-1}*, Tₙ*}*,* with *T*_{*n*-*i*} being the first record in the set (e.g. the record which is the oldest and/or has the earliest timestamp value of the *i* records received) and *Tₙ* being the last record in the set (e.g. the record which is the newest and/or has the latest timestamp value of the i records received). Transaction records 610 that are read from the data structure may comprise various fields such as fields 312, 314, 316 and 318 described hereinabove, and/or any other suitable fields for transaction properties and data.

Fig. 6B depicts a plurality of decision processes 620. Decision processes 620 may all share a common ruleset (e.g. a ruleset whose performance is to be tested/evaluated, denoted "test1.rs" in Fig. 6B). Decision processes 620 are configured to be executed on a computing device or across a plurality of computing devices, such that they can each receive transaction records 610 as inputs and produce fraud decisions 630 as outputs. To avoid redundancy and make the processing of transaction records 610 more efficient, transaction records 610 may preferably be divided up among decision processes 620 such that each record goes to at most one decision process (i.e. no two decision processes process the same record).

Each decision process independently reads one or more of the transaction records 610 from the data structure, and determines a fraud decision for each transaction record it reads (or at least for some of the transaction records it reads). The execution of decision processes 620 therefore efficiently brings about the determination of fraud decisions for (potentially very many) transaction records in the data structure that match the selected/predetermined historical period, as dictated by the ruleset that is being tested (which decision processes 620 are using).

Embodiments in which a plurality of decision processes 620 are executed (rather than a single process) may be advantageous in that they allow the reading of transaction records to be performed concurrently, asynchronously, in parallel, and/or independently. Likewise, such embodiments may advantageously allow the determiningation of the fraud decisions to occur concurrently, asynchronously, in parallel, and/or independently. One decision process may read (or generate a decision for) a first record even whilst another decision process is reading or generating a decision for a second record, without having to wait for said reading/generating to reach its completion. Such embodiments may be particularly advantageous when implemented in conjunction with a computing device capable of concurrent processing (e.g. devices supporting multithreading, process interleaving, time-sharing or multitasking; devices having multiple processors; or quantum computing devices).

Fig. 6C depicts a plurality of fraud decisions 630 that have been determined by decision processes 620 for transaction records 610 using the ruleset being tested. The set of *i* fraud decisions may be denoted {*Dₙ₋ᵢ, D*_{*n-i*+1}*, D*_{*n-i*+2}*,* ..., *D*_{*n*-1}, *Dₙ*}*,* with *Dₙ₋ᵢ* being the fraud decision for the first record in the set, *Tₙ₋ᵢ*, and *Dₙ* being the fraud decision for the last record in the set, *Tₙ,* as described above. Fig. 6C depicts all of these decisions collated "together", although it will be understood that this is not intended to be limiting, and that the decisions may be stored remote from one another following their individual processing by the different ones of decision processes 620, and need not be reuinited (e.g. within the same memory of the same computing device) for the purposes of the present invention.

As with fraud decision 340, each one of fraud decisions 630 can comprise/be a value selected from a discrete set of distinct possible values, each of which may indicate a level of likelihood or confidence that the associated transaction is fraudulent, and/or may be associated with a transaction processing action to take. As with fraud decision 340, the decisions can each comprise a selection of one of two possible values (i.e. "fraud" or "not fraud"), and can comprise/be a predication based on the common ruleset used by decision processes 620 as to whether their associated transaction is fraudulent or not.

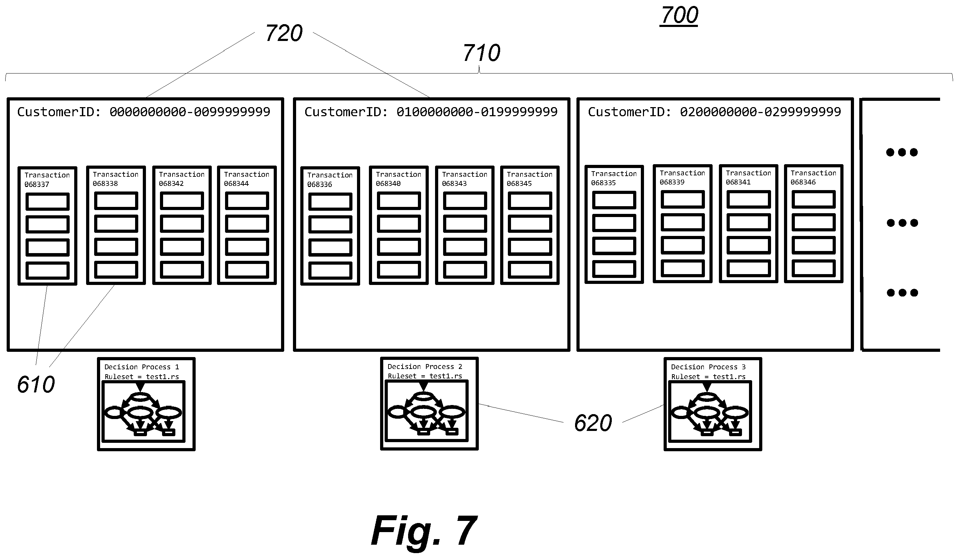

Referring now to Fig. 7, there is shown a logical configuration 700 of an exemplary data structure 710 for storing a plurality of transaction records alongside decision processes 620 configured to read from data structure 710. In accordance with the present invention, decision processes 620 read one or more transaction records for a predetermined historical period from data structure 710 and determine fraud decisions for these records using a ruleset.

Data structure 710 may be a first-in-first-out (FIFO) data structure, such as a queue. For example, records may be deleted from the data structure in the same order they were inserted, e.g. to maintain an approximately (or exactly) constant size of the queue. Additionally or alternatively, each partition of the data structure may be a FIFO data structure such as a queue. For example, transaction records may be read from each partition by a respective decision process in the order that they were inserted into that partition, e.g. to allow the decision process to determine fraud decisions for any given transaction based on the content of previous (earlier) transaction records.Data structure 710 may act as a log of transactions. Data structure 710 may be an Apache Kafka^{®} topic. Suitable specific implementations for data structure 710 will be apparent to those of skill in the art having the benfit of the present disclosure.

In some embodiments, data structure 710 may be configured manage its size and consequent memory requirements by deleting, discarding, dropping, ignoring or forgetting "old" records according to various criteria. For example, where the records include a timestamp, this timestamp may be used to delete records from beyond a particular fixed date, or to delete records which are a more than a fixed distance from the current date as recognised by the computing device. Additionally or alternatively, the data structure may be maintained at a fixed (or approximately fixed) size by deleting its oldest (e.g. held for the longest) record(s) in response to the arrival of new records, e.g. by deleting the oldest record whenever a new record is added.

Data structure 710 may comprise a plurality of distinct partitions 720, each one of transactions records 610 being configured to read transaction records from just a subset of the plurality of partitions 720 (and preferably from just one partition each). Fig. 7 depicts data structure 710 as having at least three partitions, although in practice any suitable number may be used.

The partitions may be non-overlapping logical subdivisions of data structure 710. The transaction records may be inserted, organised and/or stored in the partitions in such a way that no transaction record appears in two distinct partitions. In some embodiments, the partitions 720 may even form a partition in the strict set-theoretic sense (i.e. a grouping of transaction records 610 from data structure 710 into non-empty subsets in such a way that every transaction record is included in exactly one subset), but it will be appreciated that such strict conditions are by no means required to realise the benefit of the present invention (some of partitions 720 can be left empty, and a transaction record could be placed into two or more of partitions 720 and processed multiple times, or included in none of partitions 720 and ignored, without the overall technical benefit of the invention being lost).

During regular operation of the fraud detection system (i.e. use of the system to process and action received live transaction events, as described in relation to Fig. 4), a record of each live transaction 310 can be written to data structure 710, e.g. after the transaction has been processed (see Fig. 4, "to Kafka topic" arrow). In embodiments where data structure 710 employs partitioning, writing a record of a live transaction 310 to data structure 710 can comprise or involve writing the record to one of the partitions 720 of data structure 710.

The specific partition to which the record is written can be selected based on the data of transaction 310 itself (e.g. values of its fields). For instance, in embodiments where transactions 310, 610 comprise customer identifiers 314, a partition for writing the transaction record to can be selected based on a customer identifier 314 of the transaction. As shown in Fig. 7, this may comprise writing records whose customer identifier falls within a first range to a first partition, writing records whose customer identifier falls within a second range to a second partition, and so forth, wherein each of the ranges are ideally non-overlapping.

In some embodiments, the transaction records are stored in-order (e.g. in order of arrival and/or in timestamp order) within each partition. In such cases, the transaction records need not appear strictly in-order within the overall data structure as a whole. For instance, the partitions 720 may store transactions ordered by a number, e.g. a transaction number or timestamp. In the example of Fig. 7, it may be the case that the left-most of partitions 720 stores four transactions 610 numbered (from left to right) "068337", "068338", "068342" and "068344", whilst the second-from-the-left of partitions 720 stores four transactions 610 numbered (from left to right) "068336", "068340", "068343" and "068345", whilst the third-from-the-left of partitions 720 stores four transactions 610 numbered (from left to right) "068335", "068339", "068341" and "068346". Each of the decision processes determines fraud decisions for the transaction records it reads by using the same common ruleset, i.e. the ruleset which is being tested/evaluated. To give an example, this could be the ruleset denoted "test1.rs" in Fig. 5. The left-most partition may be assigned all transactions for which the customer identifier falls within the range "0000000000-0099999999", and the second-from-the-left may be assigned all transactions for which the customer identifier falls within the range "0100000000-0199999999", and the third-from-the-left may be assigned all transactions for which the customer identifierfalls within the range "0200000000-0299999999", and so forth.

Each of the partitions 720 of data structure 710 may itself be ordered by record timestamp, to facilitate the reading of records from the partition by one of the decision processes 620 at least partially or substantially in order of timestamp. Preferably, this ordering is a total order defined over all of the record timestamps, such that every one of the transaction records is organised within a given partition exactly in timestamp order.

In embodiments where the data structure is a topic in Apache Kafka^{®}, each of the plurality of partitions 720 can be Kafka^{®} partitions. More information regarding Kafka partitions may be found in Kafka: The Definitive Guide, 2nd Edition, by Shapira, Palino, Sivaram & Petty, first published November 2021 by O'Reilly Media, Inc. (ISBN: 9781492043089) .

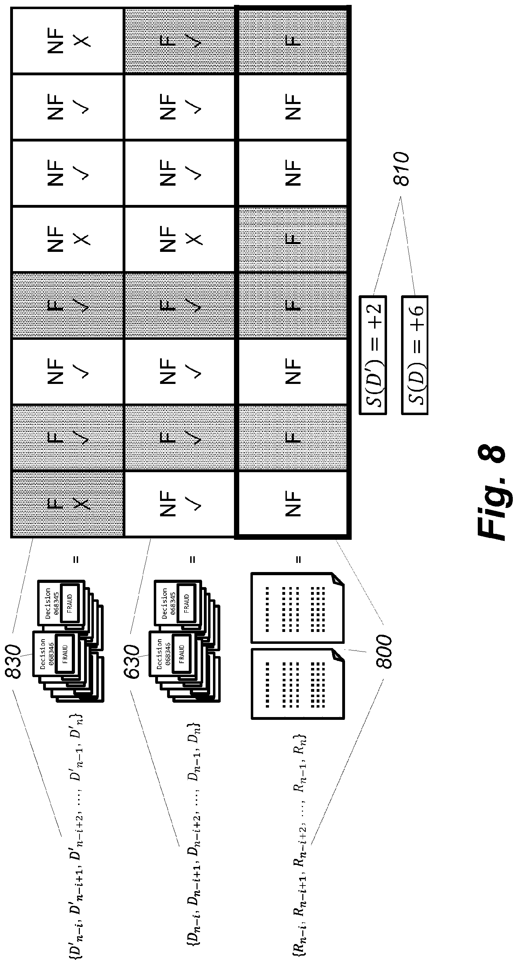

Referring now to Fig. 8, there is depicted a plurality of fraud decisions 830 for a set of transactions according to a first ruleset, a plurality of fraud decisions 630 for the same set of transactions according to a second ruleset, fraudulent transaction report data 800 (e.g. data from a stream of fraudulent transaction reports), and scores 810 determined for both the first ruleset and the second ruleset using fraudulent transaction report data 800, as will be described in more detail below. Scores 810 may be used to evaluate the performance (e.g. the accuracy) of one or both of the first and second rulesets. This may be used to determine (either automatically by a computing device of the fraud detection system, or by a human operator of the system such as user 550) whether to substitute one ruleset in place of another for use in processing the live transactions in the system.

Fraudulent transaction data 800 may be obtained by fraud detection system 10 in a variety of ways. For example, in a fraud detection system 10 implemented by a financial institution (e.g. a bank), persons having the capacity to participate in credit or debit transactions (e.g. as a customer and/or as a merchant) may be provided with means of reporting suspected fraudulent transactions. A person may suspect fraud, for instance, if a particular transaction is notified to them (e.g. in a bank statement, or on a website or application) of which they have no recollection or prior knowledge, but to which they are purportedly a party (e.g. the purported customer). In such a case, said person may be enabled by a website, application, email address or telephone number of the bank to report the transaction as fraudulent. These reports themselves may be included in fraudulent transaction report data 800, and/or may prompt further investigation by the financial institution, the outcome of which can be included in fraudulent transaction report data 800.

Banks and financial institutions may have mechanisms for generating fraudulent transaction report data of their own motion, even without requiring the transaction to be flagged by a customer and/or other purported participant. For example, upon determination that a particular transaction is/was indeed fraudulent, a determination may be made that strongly correlated transactions (e.g. other transactions made within a few seconds or minutes of the fraudulent transaction, in the same geographic area, by the same purported customer) are also fraudulent, or at least highly likely to be so, and may include these transactions (classified as being fraudulent) in fraudulent transaction report data 800. Other suitable ways of obtaining fraudulent transaction report data 800, via which rulesets and their associated fraud decisions can be evaluated, will be known to those skilled in the art.

As can be seen from the example shown Fig. 8, in which only very small datasets have been used to aid clarity, a set of fraud decisions 830 *D'* = {*D'ₙ₋ᵢ, D'*_{*n-i*+1}*, D'*_{*n-i*+2}*,* ..., *D'*_{*n*-1}*, D'ₙ*} has been generated by a decision process using a first ruleset, which identified the first, second and fourth transactions (from left to right) as fraudulent (denoted as "F" with a hatched cell), and the other transactions as non-fraudulent (denoted as "NF" with a plain cell). The results contained in fraudulent transaction report data 800 reveal that the first ruleset correctly identified the second and fourth transactions as fraudulent, and correctly identified the third, sixth and seventh transactions as non-fraudulent, giving five correct identifications in total (with any correct identification, fraudulent or non-fraudulent, denoted by a "tick" mark). However, it is also revealed by fraudulent transaction report data 800 that the first ruleset was incorrect to identify the first transaction as fraudulent and the fifth and eighth transactions as non-fraudulent, giving three incorrect identifications (with any incorrect identification, fraudulent or non-fraudulent, denoted by a "cross" mark).

Meanwhile, a set of fraud decisions 630 *D* = {*Dₙ₋ᵢ, D*_{*n-i*+1}*, D*_{*n-i*+2}*,* ..., *D*_{*n*-1}, *Dₙ*} has been generated by a decision process using a second ruleset, which identified the second, fourth and eighth transactions (from left to right) as fraudulent, and the other transactions as non-fraudulent. The results contained in fraudulent transaction report data 800 reveal that the second ruleset correctly identified the second, fourth and eighth transactions as fraudulent, and correctly identified the first, third, sixth and seventh transactions as non-fraudulent, giving seven correct identifications in total. However, it is also revealed by fraudulent transaction report data 800 that the second ruleset was incorrect to identify the fifth transaction as non-fraudulent, giving one incorrect identification.

In the illustrative example shown in Fig. 8, therefore, scores for each of the first and second ruleset could be generated/assigned e.g. by subtracting the total number of incorrect identifications from the total number of correct identifications (which would yield scores of +2 and +6 for the first and second ruleset, respectively). Alternatively, scores could be generated assigned based simply on the number of correct identifications (which would yield +5 and +7, respectively). In further examples, a strategy may assign/generate scores based on criteria such as the number of correctly identified fraudulent transactions (true positives), the number of correctly identified non-fraudulent transactions (true negatives), the degrees of confidence or the likelihoods indicated by the fraud decisions (in cases where these decisions are not a binary yes/no value), and so forth. Other suitable schemes for determing a score for a ruleset based on fraud decisions generated by said ruleset exist, and will be evident to those skilled in the art in light of the present disclosure.

In several embodiments, determining scores 810 for the rulesets enables the fraud detection system to operate more effectively by "switching out" a ruleset that produces a lower score when evaluated using the present technology, in favour of a different ruleset (e.g. a newly developed or tweaked ruleset) that produces a higher score when evaluated using the present technology. For instance, in the example of Fig. 8, a fraud detection system may operate using the first ruleset to process incoming transactions. Subsequently, a new ruleset may be designed and developed - for example, the new ruleset may be created in response to evolving tactics of fraudsters, changes in the patterns of fraudulent transactions, and so forth. In order to test whether the proposed new ruleset is actually an improvement upon the original ("champion") ruleset, the new ruleset is used to determine fraud decisions for historical transaction records according to the steps described hereinabove and a score 810 is determined for the at least the new ruleset. A score 810 for the champion ruleset, evaluated over the same historical data, may be obtained as well, or may be already available (e.g. having been precomputed at an earlier point and stored within the system).

In accordance with the determination that the score for the newly proposed ruleset is greater than the score for the previous ("champion") ruleset, the system can replace the previous champion with the proposed ruleset as the new champion to be used for processing of live transaction events. Additionally or alternatively, the system may output the model scores and/or display a prompt to the user suggesting that the previous champion be replaced. This output/prompt may offer to automatically make the replacement, doing so in response to a certain user input e.g. clicking on a GUI element or entering text on a keyboard.

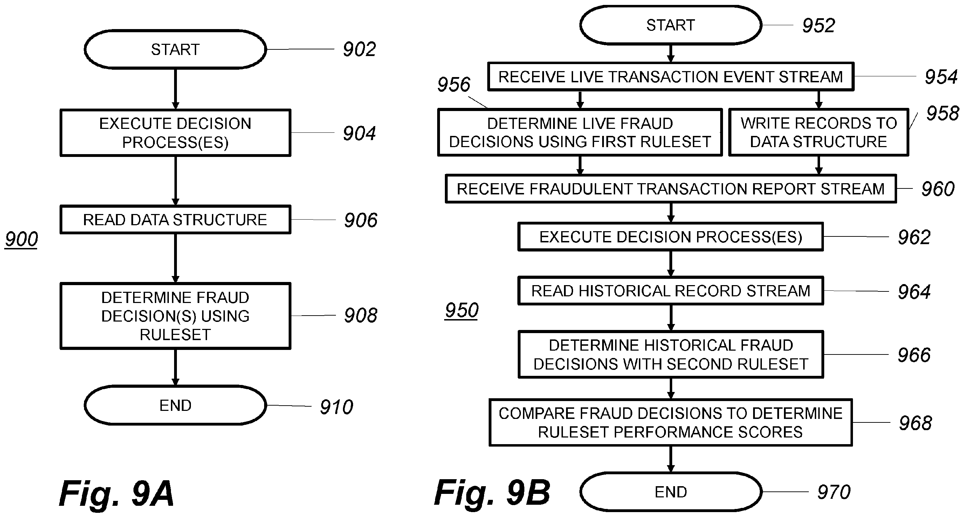

Referring now to Fig. 9A, a computer-implemented method for determining fraud decisions is depicted, in accordance with an embodiment of the present invention. The method is initiated at step 902.

In a step (not shown) prior to step 904, a data structure comprising a plurality of transaction records may be accessed. Accessed, in this context, may comprise passively receiving the data structure from a system external the system storing the decision processes. Alternatively, accessed may comprise actively retrieving the data structure from such an external system. Alternatively, accessed may comprise either passively receiving or actively retrieving the data structure from a different, or the same, memory location comprised within the same system on which the decision processes are stored. Suitable security measures, such as encryption/decryption, use of hardware security modules, and the like may be used to ensure that the data structure is kept secure during access, particularly in cases where the data structure is stored as plaintext, i.e. is comprehensible by a malicious third party if intercepted.

In step 904, one or more decision processes are executed. Each executed decision process shares a common ruleset, and is configured to use the ruleset to output fraud decisions for transaction records. A fraud decision for a transaction record is a prediction based on the ruleset as to whether the transaction to which the transaction record relates is fraudulent. One fraud decision is determined per transaction record. In other words, the ruleset is applied to each of the transaction records, via the decision processes, to determine one fraud decision for each transaction record.

Executing the decision process includes at least a reading step 906 and a determining step 908. In reading step 906, the accessed data structure is read by the one or more decision processes. Some, or all, of the data structure may be read by each decision process. In some embodiments, transaction records relating only to a predetermined historical period are read by the decision processes. Alternatively, or additionally, only those transaction records relating to the predetermined historical period are accessed in the initial access step. Transaction records may be determined to be 'from' or 'for' the predetermined historical period on the basis of a timestamp comprised within and/or associated with each transaction record.

The predetermined historical period may be predetermined prior to execution of the one or more decision processes, and may be determined by, for example, user input of a time period (such as a value in days, months, or years). Alternatively, the predetermined historical period may be determined automatically by an additional, previous, step of the method, based on information relating to the transaction records stored in the data structure. Such information might include, for example, a high prevalence of rejected transactions (e.g., transactions associated with a metadata flag identifying the record as having previously been determined to be fraudulent) in a particular timespan, or associated with a specific region or user.

In a determining step 908, the one or more decision processes determines, using the ruleset, fraud decisions for the one or more transaction records read from the data structure (i.e., the one or more transaction records from the predetermined historical period). The method may then end 910.

Referring now to Fig. 9B, a computer-implemented method for determining a performance score for a ruleset is depicted, in accordance with an embodiment of the present invention. The method is initiated at step 952.

In a step 954, a live transaction event stream is received. A live transaction event stream may be a stream of live transaction events as described in detail elsewhere herein. In a step 956, a fraud decision is determined for each of the live transaction events in the stream using a first ruleset. In a step 958, which may or may not be concurrent with determining step 956, a record of each live transaction event is written to a data structure of transaction records.

In a step 960, a stream of fraudulent transaction reports is received. Transaction reports, as detailed elsewhere herein, comprise data items corresponding to transactions and for which a manual, optionally independently verified, determination has been made as to whether or not the underlying transaction is fraudulent. A fraudulent transaction report is therefore such a report where the determination was positive, i.e., the determination was that the transaction recorded in the report was fraudulent.

One or more decision processes are executed in step 962, comprising reading 964 transaction records and determining 966 fraud decisions as detailed in respect of Fig. 9A. In this case, the transaction records are read from the data structure populated in step 958, and may therefore be referred to as a historical record stream. Similarly, the result of determination step 966 may be referred to as historical draud decisions, and are mate using a second ruleset, different to the first ruleset.

In a step 968, the fraud decisions determined using the second ruleset in step 966 are compared to the stream of fraudulent transaction reports. In other words, and as described in detail elsewhere herein, the fraud decisions determined in step 966 are analysed against the fraudulent transaction reports in order to identify false-positives, false-negatives, true-positives, and true-negatives. A performance score for the second ruleset is determined based on the comparison. The performance score may be any one of the false or true positives or negatives described above, an amalgom of two or more of these, or any other mathematically derived value which indicates how accurately the second ruleset predicts fraudulent transactions. The method may then end 970.

The term "comprising" encompasses "including" as well as "consisting" e.g. a composition "comprising" X may consist exclusively of X or may include something additional e.g. X +Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilizing conventional techniques known to those skilled in the art that all, or a portion of the software instructions may be carried out by a dedicated circuit, such as a DSP (Digital Signal Processor), programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications are possible within the scope of the appended claims and may be made by those skilled in the art. Although various embodiments have been described above with a certain degree of particularity, or with reference to one or more individual embodiments, those skilled in the art could make numerous alterations to the disclosed embodiments without departing from the scope of this invention.
The following is a numbered list of examples which may or may not be claimed:
1. A computer-implemented method, for use in electronic fraud detection, the method comprising:
   accessing a data structure comprising a plurality of transaction records; and
   executing one or more decision processes sharing a common ruleset, each decision process being configured to use the ruleset to output fraud decisions for transaction records, wherein a fraud decision for a transaction record is a prediction based on the ruleset as to whether the transaction to which the transaction record relates is fraudulent;
   wherein for each decision process, executing the decision process comprises:
   reading one or more transaction records for a predetermined historical period from the data structure; and
   determining, using the ruleset, fraud decisions for the one or more transaction records read from the data structure.
2. The method of example 1, wherein the data structure comprises a plurality of partitions, wherein for each decision process, reading the one or more transaction records comprises reading from a subset of the plurality of partitions, and preferably from a single distinct partition.
3. The method of example 2, wherein the data structure is partitioned such that the partitions are disjoint and the union of the partitions is equivalent to the data structure.
4. The method of example 2 or example 3 wherein the data structure is partitioned such that every record in the data structure appears in exactly one of the partitions.
5. The method of any preceding example wherein reading the one or more transaction records by the decision processes and/or determining the fraud decisions by a first decision process occurs concurrently with reading the one or more transaction records and/or determining the fraud decisions by at least a second decision process.
6. The method of any preceding example wherein a decision process reads each record concurrently with, asynchronously to, in parallel to, independently of, or at the same time as the other decision processes' read operations.
7. The method of any preceding example wherein determining the fraud decisions by the one or more decision processes comprises a decision process determining a fraud decision for a record concurrently with, asynchronously to, in parallel to, independently of, or at the same time as fraud decision determinations of one or more other decision processes.
8. The method of any preceding example wherein each transaction record in the data structure is timestamped.
9. The method of example 8 wherein the data structure is ordered by record timestamp.
10. The method of example 8 or example 9 when dependent on example 2 wherein each partition of the data structure is itself ordered by record timestamp.
11. The method of any one of examples 8 to 10 wherein reading the data structure, during execution of each decision process, is ordered by record timestamp.
12. The method of any preceding example wherein each transaction record in the data structure comprises a customer identifier.
13. The method of example 12 when dependent on example 2 wherein:
   the data structure is partitioned into the plurality of partitions based on the customer identifiers of its records; and/or
   the plurality of partitions of the data structure are configured such that no two partitions hold records for the same customer identifier; and/or
   each partition holds records for its own distinct set of customer identifiers.
14. The method of any preceding example, wherein determining the fraud decisions comprises determining a fraud decision for every record in the data structure.
15. The method of any preceding example, wherein the ruleset comprises a fraud model.
16. The method of example 15, wherein the fraud model is configured to map a plurality of inputs to a model score, optionally wherein the ruleset uses one or more model scores and/or one or more additional rules to determine a fraud decision.
17. The method of example 15 or example 16 wherein the fraud model is stateful, and/or wherein the fraud model determines a model score for its plurality of inputs based on previously-seen inputs.
18. The method of any preceding example wherein the ruleset is stateful, and/or wherein the ruleset determines a fraud decision for its input transaction record based on previously seen transaction records.
19. The method of any preceding example wherein the predetermined historical period is a built-in parameter of the fraud detection system or is selected by a user.
20. The method of any example dependent on example 8 wherein the historical period defines a set of transaction records whose timestamps all fall within a specific window, preferably wherein said window is the last 90 days.
21. The method of any preceding example, further comprising a step of:
   evaluating the ruleset by comparing the fraud decisions to fraudulent transaction report data to determine a score for the ruleset.
22. The method of any preceding example, further comprising:
   receiving a live transaction event; and
   writing a record of the live transaction event to the data structure.
23. The method of example 22 when dependent upon example 2, wherein writing the record of the live transaction event to the data structure comprises writing the record of the live transaction event to one of the partitions.
24. The method of example 23 when dependent on example 12, wherein the partition for the record of the live transaction event to be written to is selected based on a customer identifier of the live transaction event.
25. The method of any preceding example wherein each decision process is a unique instance of the same decision computer program.
26. The method of any preceding example wherein at least one decision process itself runs as a plurality of concurrent threads, preferably wherein every decision process itself runs as a plurality of concurrent threads.
27. The method of any preceding example wherein the data structure is a Kafka topic and/or the decision processes run on a Kafka cluster.
28. The method of any example dependent on example 2 wherein the partitions are Kafka partitions.
29. The method of example 25 wherein the decision computer program is a Kafka consumer application.
30. A computer-implemented method for use in electronic fraud detection, the method comprising:
   receiving a stream of live transaction events;
   for each live transaction event:
      determining, using a first ruleset, a fraud decision for the live transaction event, wherein the fraud decision for the live transaction event is a prediction based on the ruleset as to whether the transaction to which the live transaction event relates is fraudulent; and
      writing a record of the live transaction event to a data structure of transaction records;
   receiving a stream of fraudulent transaction reports;
   executing one or more decision processes sharing a common second ruleset, each decision process being configured to use the second ruleset to output fraud decisions for transaction records, wherein a fraud decision for a transaction record is a prediction based on the ruleset as to whether the transaction to which the transaction record relates is fraudulent; wherein, for each decision process, executing the decision process comprises:
      reading one or more transaction records for a predetermined historical period from the data structure; and
      determining, using the second ruleset, fraud decisions for the one or more transaction records read from the data structure;
         and
   comparing the fraud decisions determined using the second ruleset to data from the stream of fraudulent transaction reports to determine a performance score for the second ruleset.
31. The method of example 30, further comprising either:
   receiving a previously-computed performance score for the first ruleset; or
   comparing the fraud decisions determined using the first ruleset to data from the stream of fraudulent transaction reports to determine a performance score for the first ruleset.
32. The method of example 31, further comprising:
   in accordance with a determination that the performance score for the second ruleset indicates a higher accuracy than the performance score for the first ruleset, replacing the first ruleset used to determine fraud decisions for live transaction events with the second ruleset.
33. The method of example 31 or example 32, further comprising:
   determining that the performance score for the second ruleset indicates a higher accuracy than the performance score for the first ruleset;
   receiving a new live transaction event;
   determining, using the second ruleset, a fraud decision for the new live transaction event; and either:
      in accordance with a determination that the new live transaction event is likely to be fraudulent, terminating and/or generating an alert for the transaction; or
      in accordance with a determination that the new live transaction event is not likely to be fraudulent, processing the transaction.
34. The method of any one of examples 30 to 33, wherein determining the fraud decision for each live transaction event occurs prior to writing the record to the data structure.
35. The method of any one of examples 30 to 33, wherein determining the fraud decision for each live transaction event occurs or at the same time as, or concurrently with, writing the record to the data structure.
36. The method of any preceding example wherein the data structure is a queue.
37. The method of any preceding example wherein the data structure is a log.
38. A device comprising a processor and a memory, the memory containing computer-readable instructions which, when executed on the processor, cause the processor to perform the method of any preceding example.
39. A non-transitory computer-readable storage medium containing computer-readable instructions which, when executed by a computer, cause the computer to perform the method of any one of examples 1 to 37.
40. A computer program comprising instructions which, when the program is executed by a computer, cause the computer to carry out the method of any one of examples 1 to 37.

## Claims

1. A computer-implemented method, for use in electronic fraud detection, the method comprising:
accessing a data structure comprising a plurality of transaction records; and
executing one or more decision processes sharing a common ruleset, each decision process being configured to use the ruleset to output fraud decisions for transaction records, wherein a fraud decision for a transaction record is a prediction based on the ruleset as to whether the transaction to which the transaction record relates is fraudulent;
wherein for each decision process, executing the decision process comprises:
reading one or more transaction records for a predetermined historical period from the data structure; and
determining, using the ruleset, fraud decisions for the one or more transaction records read from the data structure.

2. The method of claim 1, wherein the data structure comprises a plurality of partitions, wherein for each decision process, reading the one or more transaction records comprises reading from a subset of the plurality of partitions, and preferably from a single distinct partition.

3. The method of any preceding claim wherein:
reading the one or more transaction records by the decision processes and/or determining the fraud decisions by a first decision process occurs concurrently with reading the one or more transaction records and/or determining the fraud decisions by at least a second decision process; and/or
a decision process reads each record concurrently with, asynchronously to, in parallel to, independently of, or at the same time as the other decision processes' read operations.

4. The method of any preceding claim wherein:
determining the fraud decisions by the one or more decision processes comprises a decision process determining a fraud decision for a record concurrently with, asynchronously to, in parallel to, independently of, or at the same time as fraud decision determinations of one or more other decision processes; and/or
determining the fraud decisions comprises determining a fraud decision for every record in the data structure.

5. The method of any preceding claim wherein each transaction record in the data structure is timestamped.

6. The method of claim 5 wherein the data structure is ordered by record timestamp, optionally wherein:
each partition of the data structure is itself ordered by record timestamp; and/or
reading the data structure, during execution of each decision process, is ordered by record timestamp.

7. The method of any preceding claim wherein each transaction record in the data structure comprises a customer identifier.

8. The method of claim 7 when dependent on claim 2 wherein:
the data structure is partitioned into the plurality of partitions based on the customer identifiers of its records; and/or
the plurality of partitions of the data structure are configured such that no two partitions hold records for the same customer identifier; and/or
each partition holds records for its own distinct set of customer identifiers.

9. The method of any preceding claim, wherein the ruleset comprises a fraud model,
optionally wherein the fraud model is configured to map a plurality of inputs to a model score, optionally wherein the ruleset uses one or more model scores and/or one or more additional rules to determine a fraud decision; and
optionally wherein the fraud model is stateful, and/or wherein the fraud model determines a model score for its plurality of inputs based on previously-seen inputs.

10. The method of any preceding claim wherein:
the predetermined historical period is a built-in parameter of the fraud detection system or is selected by a user; and/or
each transaction record in the data structure is timestamped and the historical period defines a set of transaction records whose timestamps all fall within a specific window, preferably wherein said window is the last 90 days.

11. The method of any preceding claim, further comprising a step of:
evaluating the ruleset by comparing the fraud decisions to fraudulent transaction report data to determine a score for the ruleset.

12. The method of any preceding claim, further comprising:
receiving a live transaction event; and
writing a record of the live transaction event to the data structure;
optionally wherein:
the data structure comprises a plurality of partitions and for each decision process, reading the one or more transaction records comprises reading from a subset of the plurality of partitions; and
writing the record of the live transaction event to the data structure comprises writing the record of the live transaction event to one of the partitions;
optionally wherein each transaction record in the data structure comprises a customer identifier and the partition for the record of the live transaction event to be written to is selected based on a customer identifier of the live transaction event.

13. The method of any preceding claim wherein:
the data structure is a Kafka topic and/or the decision processes run on a Kafka cluster; and/or
the data structure comprises a plurality of Kafka partitions and for each decision process, reading the one or more transaction records comprises reading from a subset of the plurality of Kafka partitions, preferably a single distinct Kafka partition.

14. A computer-implemented method for use in electronic fraud detection, the method comprising:
receiving a stream of live transaction events;
for each live transaction event:
determining, using a first ruleset, a fraud decision for the live transaction event, wherein the fraud decision for the live transaction event is a prediction based on the ruleset as to whether the transaction to which the live transaction event relates is fraudulent; and
writing a record of the live transaction event to a data structure of transaction records;
receiving a stream of fraudulent transaction reports;
executing one or more decision processes sharing a common second ruleset, each decision process being configured to use the second ruleset to output fraud decisions for transaction records, wherein a fraud decision for a transaction record is a prediction based on the ruleset as to whether the transaction to which the transaction record relates is fraudulent; wherein, for each decision process, executing the decision process comprises:
reading one or more transaction records for a predetermined historical period from the data structure; and
determining, using the second ruleset, fraud decisions for the one or more transaction records read from the data structure;
and
comparing the fraud decisions determined using the second ruleset to data from the stream of fraudulent transaction reports to determine a performance score for the second ruleset.

15. The method of claim 14, further comprising either:
receiving a previously-computed performance score for the first ruleset; or
comparing the fraud decisions determined using the first ruleset to data from the stream of fraudulent transaction reports to determine a performance score for the first ruleset.

16. The method of claim 15, further comprising:
in accordance with a determination that the performance score for the second ruleset indicates a higher accuracy than the performance score for the first ruleset, replacing the first ruleset used to determine fraud decisions for live transaction events with the second ruleset.

17. The method of claim 15 or claim 16, further comprising:
determining that the performance score for the second ruleset indicates a higher accuracy than the performance score for the first ruleset;
receiving a new live transaction event;
determining, using the second ruleset, a fraud decision for the new live transaction event; and either:
in accordance with a determination that the new live transaction event is likely to be fraudulent, terminating and/or generating an alert for the transaction; or
in accordance with a determination that the new live transaction event is not likely to be fraudulent, processing the transaction.

18. A device comprising a processor and a memory, the memory containing computer-readable instructions which, when executed on the processor, cause the processor to perform the method of any preceding claim.

19. A non-transitory computer-readable storage medium containing computer-readable instructions which, when executed by a computer, cause the computer to perform the method of any one of claims 1 to 17.

20. A computer program comprising instructions which, when the program is executed by a computer, cause the computer to carry out the method of any one of claims 1 to 17.
